# EUROPEAN PATENT APPLICATION

(11) **EP 4 074 181 A1**
(43) Date of publication of application: **19.10.2022**
(21) Application number: 22168550.6
(22) Date of filing: 14.04.2022
(51) Int. Cl.: A21C 5/00, A21C 9/08, A21C 11/00, A21C 13/02

(54) **METHOD AND PLANT FOR THE PRODUCTON OF PIADINA**

(30) Priority: 14.04.2021 IT 202100009407
(71) Applicant: Deco Industrie S. Coop. P.A., 48012 Bagnacavallo (RA) (IT)
(72) Inventor: SCHIAVETTI, Paolo Emilio, 48012 BAGNACAVALLO (RA) (IT); GIACOBBE, Sandro, 48012 BAGNACAVALLO (RA) (IT); CANE', Francesco, 48012 BAGNACAVALLO (RA) (IT)
(74) Representative: Studio Torta S.p.A.

(57) **Abstract**

A method for the production of piadina (2); the method comprises a preparation step, during which at least a dough portion (5) is prepared;

a flattening step, during which a flattening machine (3), which is arranged at a work station (4), flattens said dough portion (5) so as to obtain a flattened portion (6) with a thickness smaller than 8 mm (in particular, smaller than or equal to 3 mm);

a conveying step, during which a conveyor assembly (7) transports said dough portion

a feeding step, during which said dough portion (5) is fed onto an area of the conveyor assembly (7) in the area of the input station (8) by means of a feeding assembly (10);

the method being characterized in that the flattening machine (3) comprises at least one support element (11), on which, during the flattening step, said dough portion (5) is arranged; and a pressing device (12), which, in turn, comprises at least one pushing head (13) and at least one actuator (14), which, during the flattening step, moves the pushing head (13) towards the support element (11) so that the pushing head (13) gets close to the support element (11) and exerts a pressure upon said dough portion (5) in order to flatten the dough portion (5) and obtain said flattened portion (6).

## Description

### CROSS-REFERENCE TO RELATED APPLICATIONS

This Patent Application claims priority from Italian Patent Application No. 102021000009407 filed on April 14, 2021.

### TECHNICAL FIELD

The invention relates to a method and a plant for the production of piadina.

### BACKGROUND OF THE INVENTION

In the piadina manufacturing industry (piadina being an Italian flatbread, typically from Emilia Romagna), the following procedure is usually applied: mixing all ingredients together to obtain a homogeneous dough; dividing the dough so as to obtain small balls; flattening each ball with mechanical rollers to obtain flatbreads with a desired diameter and thickness; cooking the flatbreads on a griddle at a temperature of about 150°C for a total amount of time of about 1.5 minutes.

The piadina obtained by so doing often is relatively fragile and, when folded, can easily break. This can lead to problems when the flatbreads have to be filled and, especially, when they are used to obtain filled rolls (the piadina is rolled onto itself together with the filling).

Furthermore, the known procedure described above does not allow manufacturers to obtain flatbreads with shapes that are substantially different from an approximately circular shape.

The object of the invention is to provide a method and a plant for the production of piadina, which are conceived so as to at least partially overcome the drawbacks of the prior art and, at the same time, are easy and economic to be implemented.

### SUMMARY

According to the invention, there are provided a method and a plant according to the following independent claims attached and, preferably, according to any one of the dependent claims directly or indirectly depending on the independent claims.

### BRIEF DESCRIPTION OF THE FIGURES

The invention will now be described with reference to the accompanying drawings, which show some non-limiting embodiments thereof, wherein:
- figure 1 is a schematic side view of a plant according to the invention;
- figure 2 is a schematic side view of a detail of figure 1 in a larger scale;
- figure 3 is a partially sectional side view of an embodiment of a part of the detail of figure 2;
- figure 4 is a view from the bottom of an embodiment of a component of figure 3;
- figure 5 is a view from the bottom of a different embodiment (different form the one of figure 4) of a component of figure 3;
- figure 6 is a cross section of a different embodiment of a detail of the part of figure 3:;
- figure 7 is a view from the bottom of the component of figure 6; and
- figure 8 is a cross section of a different embodiment of the detail of figure 6.

### DETAILED DESCRIPTION

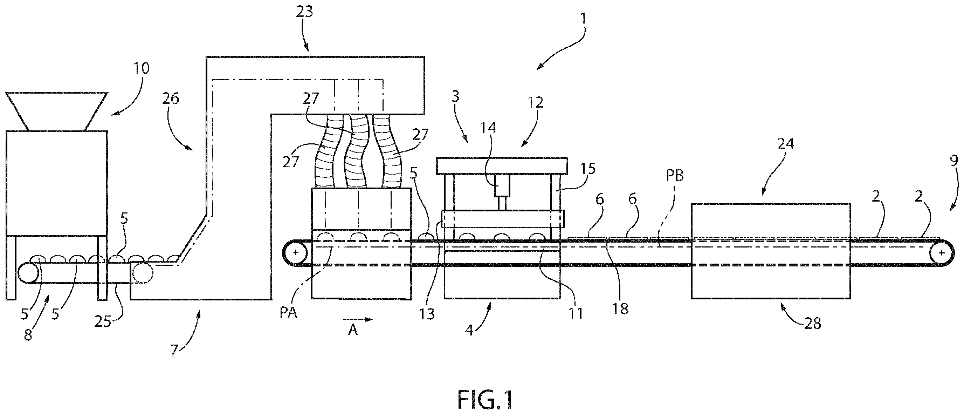

In figure 1, number 1 indicates, as a whole, a plant for the production of piadina 2. The plant 1 comprises: a flattening machine 3, which is arranged at a work station 4 and is configured to flatten a dough portion 5 (for example, a dough ball) so as to obtain a flattened portion 6 (in particular, with a thickness smaller than 8 mm; more in particular, smaller than or equal to 3 mm); a conveyor assembly 7, which is configured to transport the dough portion 5 along a first portion PA of a given path from an input station 8 to the work station 4 and the flattened portion 6 along a second portion PB of a given path from the work station 4 to an output station 9; and a feeding assembly 10, which is configured to feed the dough portion 5 onto an area of the conveyor assembly 7 in the area of the input station 8.

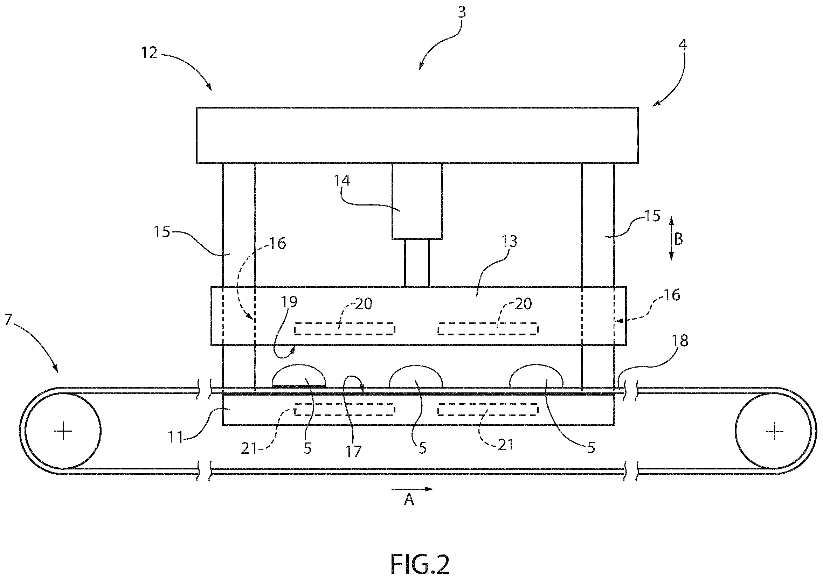

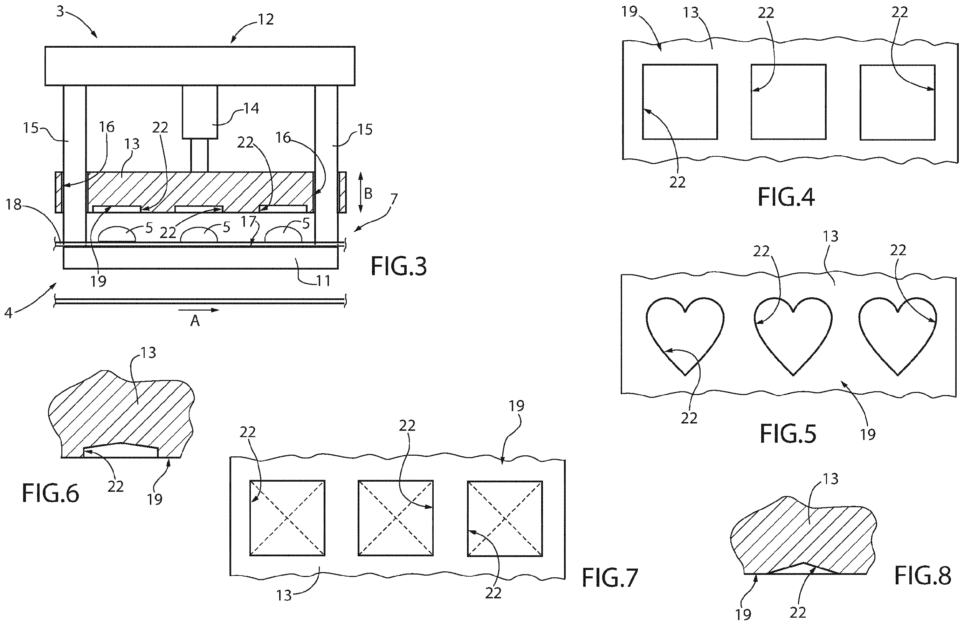

With particular reference to figures 2 and 3, the flattening machine 3 comprises at least one support element 11 and a pressing device 12, which, in turn, comprises at least one pushing head 13 and at least one actuator 14 (in particular, a fluid-dynamic actuator; more in particular, an oil-dynamic actuator), which is configured to move the pushing head 13 towards the support element 11 so that the pushing head 13 gets close to the support element 11 and exerts a pressure upon the dough portion 5 in order to flatten the dough portion 5 and obtain the flattened portion 6.

In particular, in use, the dough portion 5 is flattened between the pushing head 13 and the support element 11.

Experiments have shown that, by so doing, the resulting piadina 2 is surprisingly less fragile and more easily pliable than flatbreads obtained by means of rolling. This difference is supposedly due to the fact that the rolling (contrary to what happens when the system described above is implemented) causes the dough to undergo a sort of stretching, which negatively affects the mechanical properties of the finished product.

In particular, the actuator 14 is also configured to move the pushing head 13 (after the flattening of the dough portion 5 and, hence, after having obtained the flattened portion 6) so as to move the pushing head 13 away from the support element 11.

According to some non-limiting embodiments, the pressing device 12 comprises at least two actuators 14. In this way, the pressure can be distributed in an even manner and the mechanical properties of the piadina 2 can further be improved.

Advantageously, though not necessarily, the pressing device 12 comprises sliding guides 15 (in particular, uprights integral to the support element 11) configured to make sure that the pushing element 13 and the support element maintain the correct orientation and relative position during the movement of the pushing head 13. More precisely, though not in a limiting manner, the pushing head 13 comprises through holes 16, through which the guides 15 extend. This also leads to a further improvement of the mechanical properties of the piadina 2.

Advantageously, though not necessarily, the pressing device 12 is configured to exert a force upon the dough portion 5 ranging from about 200000 Newtons (in particular, from about 230000 Newtons) to about 300000 Newtons (in particular, to about 270000 Newtons). We can say that the pressure applied to the dough portion 5 ranges from about 200000 Pascals (in particular, from about 230000 Pascals) to about 300000 Pascals (in particular, to about 270000 Pascals) .

In particular, the conveyor assembly 7 is configured to feed said dough portion 5 to the work station 4 and the flattened portion 6 from the work station 4 along the given path in a moving direction A. The actuator 14 is configured (if necessary, together with the guides 15 and the through holes 16) to move the pushing head 13 in a pushing direction B, which is substantially perpendicular to the moving direction A.

According to some non-limiting embodiments, the support element 11 has an upper surface 17, which is turned towards (in particular, faces) the pushing head 13. More precisely, though not necessarily, the upper surface 17 is substantially perpendicular to the pushing direction B.

According to some non-limiting embodiments, the conveyor assembly 7 comprises a conveyor belt 18, which extends through the work station 4 between the support element 11 and the pushing head 13 and is configured to come into contact with the dough portion 5. In particular, the conveyor belt 18 is arranged in contact with the upper surface 17 of the support element 11.

Advantageously, though not necessarily, the conveyor belt 18 comprises at least one perfluorocarbon (in particular, polytetrafluoroethylene) at least on part of its surface facing the pushing head 13. Experiments have shown that, by so doing, there is smaller risk that the flattened portion 6 even only partially sticks to the conveyor belt 18.

According to some non-limiting embodiments, the pushing head 13 has a pressing surface 19, which faces the support element 11 (in particular, the upper surface 17; more in particular, it faces the conveyor belt 18) and is configured to come into contact with the dough portion 5 (and, hence, in particular, with the flattened portion 6).

Advantageously, though not necessarily, the pressing surface 19 is obtained by means of milling with a milling cutter with a 25 mm diameter.

Advantageously, though not necessarily, the pressing surface 19 has, on at least a part thereof, at least one perfluorocarbon (in particular, polytetrafluoroethylene) and/or a ceramic material.

In this case, again, experiments have shown that, by so doing, there is smaller risk that the flattened portion 6 sticks to the conveyor pushing head 13.

Advantageously, though not necessarily, the pushing head 13 also comprises a heating element 20 (for example, a resistance), which is configured to heat the pressing surface 19 so that the pressing surface 19 has a temperature ranging from about 130° C (in particular, from about 150° C; more in particular, from about 170 ° C) to about 240° C (in particular, to about 210° C; more in particular, to about 190° C).

In addition or alternatively, the support element 11 comprises a heating element 21 (for example, a resistance), which is configured to heat the upper surface 17 at a temperature ranging from about 130° C (in particular, from about 140° C; more in particular, from about 160°C) to about 240° C (in particular, to about 210° C; more in particular, to about 180° C).

Experiments have shown that heating the pressing surface 19 and the upper surface 17 not only reduces that risk that the dough sticks to this/these surface/s, but also surprisingly reduces the frailty of the resulting piadina, improving at the same time the ability thereof to be folded. This is presumably due to the fact that the heat applied during the pressing stabilizes in some way elastic components inside the dough.

In some specific and non-limiting cases, the power of the heating elements 20 ad 21 ranges from about 50 Kw (in particular, from about 55 Kw) to about 70 Kw (in particular, to about 65 Kw).

With particular reference to figures 3 to 8, according to some non-limiting embodiments, the pressing surface 19 has at least one recess 22 having a depth ranging from about 0.5 mm to about 8 mm (in particular, to about 2 mm; more in particular, to about 1.5 mm) and is configured to at least partially press the dough portion 5 into it so that the flattened portion 6 assumes the peripheral shape of the recess 22.

Please, note that, in the embodiment of figure 8, the recess 22 has the aforesaid depth only in a central area. In other words, in these cases, peripheral areas of the recess 22 can have a depth that is smaller than 0.5 mm.

According to some non-limiting embodiments (such as the ones of figures 3 and 6), the whole recess 22 has the aforesaid depth.

In some specific non-limiting cases, the recess 22 substantially has the shape of a square (figure 4; in this case, a substantially square piadina 2 is obtained) or it substantially has the shape of a heart (figure 5; in this case, a substantially heart-shaped piadina 2 is obtained).

Advantageously, though not necessarily, the recess 22 has a tapered shape (figures 6, 7 and 8). In particular, a central area of the recess 22 has a greater depth (for example, ranging from about 0.05 mm to about 0.2 mm; more precisely, though not necessarily, from about 0.07 mm to about 0.14 mm) than side portions (closer to the outer edge) .

By so doing, experiments have shown that there is smaller risk that the flattened portion 6 gets stuck in the recess 22.

With particular reference to figure 1, the plant 1 comprises a rest assembly 23, which is arranged along the given path (in particular, along said first portion PA) between the input station 8 and the work station 4 and is configured to allow the dough portion 5 to rest (in particular, at a temperature ranging from about 18°C - more in particular, from about 24° C - to about 35°C - more in particular, to about 30° C - for an amount of time ranging from about 15 minutes - more in particular, from about 25 minutes - to about 45 minutes - more in particular, to about 35 minutes); and a cooking assembly 24, which is arranged downstream of the work station along the second segment PB of the given path and is configured to at least partially cook (for example, at a temperature ranging from about 100°C - in particular, 130°C - to about 200°C - in particular, 170°C - for an amount of time ranging from 0.5 minutes - in particular, from 1 minute - to 6 minutes - in particular, 3 minutes) the flattened portion 6 (in particular, so as to obtain a piadina 2, which corresponds to the flattened portion 6 at least partially cooked).

Experiments have shown that the rest assembly also improves the mechanical features of the piadina 2 and reduces the risk that flattened portion 6 (partially) sticks to the pushing head 13 and/or to the conveyor belt 18.

According to some non-limiting embodiments, the feeding assembly 10 (which is partially shown in figure 1) is configured to obtain said dough portion 5 starting from (in particular, dividing) a dough mass (which is not shown). More precisely, though not necessarily, the feeding assembly 10 is also configured to obtain the dough mass by mixing the ingredients with one another (in particular, flour, water, salt, a fat component - for example, oil and/or lard - and, optionally, a leavening agent - for example, sodium bicarbonate, disodium diphosphate, corn starch and/or wheat starch).

According to some non-limiting embodiments (for example, as shown in figure 1), the conveyor assembly 7 comprises different conveyor devices arranged in series: a conveyor belt 25 (onto which, in use, the feeding assembly 10 lays the dough portion 5 in the area of the input station 8), a conveyor 26 (pocket intermediate proofer - configured to transport the dough portion 5 through the rest assembly 23) and discharge ducts 27 (to lead the dough portion onto the conveyor belt 18).

In accordance with an aspect of the invention, there is also provided a method for the production of piadina.

The method comprises a preparation step, during which at least a dough portion 5 is prepared, and a flattening step, during which a flattening machine 3, which is arranged at a work station 4, flattens said dough portion 5 so as to obtain a flattened portion 6. In particular, the flattened portion 6 has a thickness smaller than 8 mm, more in particular, smaller than or equal to 3 mm (even more in particular, greater than 1 mm).

The method further comprises a conveying step, during which a conveyor assembly 7 transports the dough portion 5 along a first portion PA of a given path from an input station 8 to the work station 4 and the flattened portion 6 along a second portion PB of a given path from the work station 4 to an output station 9; and a feeding step, during which the dough portion 5 is fed onto an area of the conveyor assembly 7 in the area of the input station 8 by means of a feeding assembly 10.

The flattening machine 3 comprises at least one support element 11, above which, during the flattening step, the dough portion 5 is arranged; and a pressing device 12, which, in turn, comprises at least one pushing head 13 and at least one actuator 14, which, during the flattening step, moves the pushing head 13 towards the support element 11 so that the pushing head 13 gets close to the support element and exerts a pressure upon the dough portion 5 in order to flatten the dough portion 5 and obtain the flattened portion 6.

Advantageously, though not necessarily, the actuator 14 moves the pushing head 13 in a pushing direction B, which is substantially perpendicular to an upper surface 17 of the support element 11. More precisely, though not necessarily, the actuator 14 moves the pushing head 13 so as to move it away from the support element 11.

In particular, the dough portion 5 consists of a dough made of flour, water, salt, a fat component (for example, oil and/or lard) and, optionally, a leavening agent (for example, sodium bicarbonate, disodium diphosphate, corn starch and/or wheat starch).

According to some non-limiting embodiments, the dough portion 5 consists of: about 55% to about 60% of flour, about 22% to about 28% of water, about 12% to about 18% of the fat component, about 0.5% to about 2% of salt and about 0.5% to about 2% of the leavening agent.

According to some specific, though non-limiting, examples, the dough portion 5 consists of: about 58% of flour, about 15% of water, about 15% of the fat component, about 1% of salt and about 1% of the leavening agent.

In this text, the percentages of the different components of the dough portion 5 (for example, the ones mentioned above) are weight percentages relative to the total weight of the dough portion.

Advantageously, though not necessarily, during the pressing step, the pressing machine 3 (in particular, the pressing device 12) exerts a force upon the dough portion 5 ranging from about 200000 Newtons (in particular, from about 230000 Newtons) to about 300000 Newtons (in particular, to about 270000 Newtons).

According to some non-limiting embodiments, the conveyor assembly 7 feeds the dough portion 5 to the work station 4 and the flattened portion 6 from the work station 4 in a moving direction A, which is substantially perpendicular to the pushing direction B.

According to some non-limiting embodiments, the pushing head 13 has a pressing surface 19, which faces the support element 11 (in particular, an upper surface 17 thereof). In particular, during the flattening step, the pressing surface 19 comes into contact with the dough portion 5 (and, more in particular, with the flattened portion 6).

Advantageously, though not necessarily, during the flattening step, the pressing surface 19 has a temperature ranging from about 130° C (in particular, from about 150° C; more in particular, from about 170 ° C) to about 240° C (in particular, to about 210° C; more in particular, to about 190° C). In addition or alternatively, during the flattening step, the upper surface 17 of the support element 11 facing the pushing head 13 has a temperature ranging from about 130° C (in particular, from about 140° C; more in particular, from about 160°C) to about 240° C (in particular, to about 210° C; more in particular, to about 180° C).

Advantageously, though not necessarily, the flattening step has a duration ranging from about 1 second to about 5 seconds, in particular from about 2 seconds to about 4 seconds, more in particular around 3 seconds.

In particular, during the flattening step, the conveyor assembly 7 interrupts the movement of the dough portion 5 (and of the flattened portion 6) along the given path. More precisely, the duration of the flattening step is calculated from when the conveyor assembly 7 interrupts the movement of the dough portion 5 (and of the flattened portion 6) along the given path and the pushing head 13 comes into contact with the dough portion 5 to when the pushing head 13 moves away from the flattened portion 6.

According to some preferred, though non-limiting, embodiments, the conveyor assembly 7 comprises a conveyor belt 18, which (during the flattening step) extends (through the work station 4) between the support element 11 and the pushing head 13 and over which the dough portion 5 (and the flattened portion 6) is arranged.

In particular, during the flattening step, the conveyor belt 18 is arranged in contact with the upper surface 17 of the support element 11.

Advantageously, though not necessarily, the conveyor belt 18 comprises at least one perfluorocarbon (in particular, polytetrafluoroethylene) at least on part of its surface facing the pushing head 13.

In addition or alternatively, the pressing surface 19 of the pushing head 13 has, at least on a part thereof, at least one perfluorocarbon (in particular, polytetrafluoroethylene) and/or a ceramic material.

Advantageously, though not necessarily, the pressing surface 19 has at least one recess 22 having a depth ranging from about 0.5 mm to about 8 mm (in particular, to about 2 mm; more in particular, to about 1.5 mm); during the flattening step, said dough portion 5 is at least partially pressed into said recess 22 so as to assume the peripheral shape of the recess 22.

Advantageously, though not necessarily, the recess 22 has a tapered shape (figures 6 and 7). In particular, a central area of the recess 22 has a greater depth (for example, ranging from about 0.05 mm to about 0.2 mm; more precisely, though not necessarily, from about 0.07 mm to about 0.14 mm) than side portions (closer to the outer edge) .

Advantageously, though not necessarily, the method comprises a rest step, which is subsequent to the preparation step (and to the feeding step) and prior to the flattening step and during which the dough portion 5 is left to rest (in particular, at a temperature ranging from about 18°C - more in particular, from about 24° C - to about 35°C - more in particular, to about 30° C - for an amount of time ranging from about 15 minutes - more in particular, from about 25 minutes - to about 45 minutes - more in particular, to about 35 minutes).

Experiments have shown that this step leads both to flatbreads 2 with better mechanical features and to a smaller risk that flattened portion 6 sticks to the pushing head 13 (and/or to the conveyor belt 18).

According to some non-limiting embodiments, the method also comprises a cooking step, which is subsequent to the flattening step and during which the flattened portion 6 is at least partially cooked in a cooking assembly 24 (for example, at a temperature ranging from about 200°C to about 250°C for an amount of time ranging from 2 minutes to 6 minutes) arranged (in the area of a cooking station 28) downstream of the work station 4 along the segment PB of the given path. In particular, this leads to the production of a piadina 2 (which corresponds to the flattened portion 6 - at least partially - cooked).

Advantageously, though not necessarily, the method is implemented by a plant 1 as described above.

## Claims

1. A method for the production of piadina (2); the method comprises a preparation step, during which at least a dough portion (5) is prepared;
a flattening step, during which a flattening machine (3), which is arranged at a work station (4), flattens said dough portion (5) so as to obtain a flattened portion (6) with a thickness smaller than 8 mm (in particular, smaller than or equal to 3 mm);
a conveying step, during which a conveyor assembly (7) transports said dough portion (5) along a first portion (PA) of a given path from an input station (8) to the work station (4) and the flattened portion (6) along a second portion (PB) of a given path from the work station (4) to an output station (9); and
a feeding step, during which said dough portion (5) is fed onto an area of the conveyor assembly (7) at the input station (8) by means of a feeding assembly (10);
the method being **characterized in that** the flattening machine (3) comprises at least one support element (11), over which, during the flattening step, said dough portion (5) is arranged; and a pressing device (12), which, in turn, comprises at least one pushing head (13) and at least one actuator (14), which, during the flattening step, moves the pushing head (13) towards the support element (11) so that the pushing head (13) gets close to the support element (11) and exerts a pressure upon said dough portion (5) in order to flatten the dough portion (5) and obtain said flattened portion (6).

2. The method according to claim 1, wherein said at least one actuator (14) moves the pushing head (13) in a pushing direction (B), which is substantially perpendicular to an upper surface (17) of the support element (11); said dough portion (5) consists of a dough made of flour, water, salt, a fat component (for example, oil and/or lard) and, optionally, a leavening agent (for example, sodium bicarbonate, disodium diphosphate, corn starch and/or wheat starch); in particular, said conveyor assembly (7) feeds said dough portion (5) to the work station (4) and said flattened portion (6) from the work station (4) in a moving direction (A), which is substantially perpendicular to said pushing direction (B).

3. The method according to claim 1 or 2, wherein the pushing head (13) as a pressing surface (19), which faces the support element (11) and, during the flattening step, has a temperature ranging from about 130°C to about 240°C and comes into contact with said dough portion (5); during the flattening step, an upper surface (17) of the support element (11) facing the pushing head (13) has a temperature ranging from about 130° to about 240°C.

4. The method according to any one of the preceding claims, wherein the flattening step has a duration ranging from about 1 second to about 5 seconds, in particular from about 2 seconds to about 4 seconds; during the flattening step, the conveyor assembly (7) interrupts the movement of said dough portion (5) along said given path.

5. The method according to any one of the preceding claims, wherein said conveyor assembly (7) comprises a conveyor belt (18), which extends between the support element (11) and the pushing head (13) and over which said dough portion (5) is arranged; in particular, during the flattening step, the conveyor belt (18) is arranged in contact with said upper surface (17) of the support element (11).

6. The method according to any one of the preceding claims, wherein the pushing head (13) has a pressing surface (19), which faces the support element (11) and has at least one recess (22) having a depth ranging from about 0.5 mm to about 8 mm (in particular, to about 2 mm; more in particular, to about 1.5 mm); during the flattening step, said dough portion (5) is at least partially pressed into said recess (22) so as to assume the peripheral shape of the recess (22).

7. The method according to any one of the preceding claims and comprising a rest step, which is subsequent to the preparation step and prior to the flattening step and during which said dough portion (5) is left to rest (in particular, at a temperature ranging from about 18°C to about 35°C for an amount of time ranging from 15 minutes to 45 minutes); and a cooking step, which is subsequent to the flattening step and during which the flattened portion (6) is at least partially cooked in a cooking assembly (24) (for example, at a temperature ranging from about 100°C to about 200°C for an amount of time ranging from 0.5 minutes to 6 minutes) arranged downstream of the work station (4) along the second segment (PB) of said given path.

8. A plant for the production of piadina (2) comprising;
a flattening machine (3), which is arranged at a work station (4) and is configured to flatten a dough portion (5) so as to obtain a flattened portion (6) with a thickness smaller than 8 mm;
a conveyor assembly (7), which is configured to transport said dough portion (5) along a first portion (PA) of a given path from an input station (8) to the work station (4) and the flattened portion (6) along a second portion (PB) of a given path from the work station (4) to an output station (9); and
a feeding assembly (10), which is configured to feed said dough portion (5) onto an area of the conveyor assembly (7) in the area of the input station (8);
the plant (1) being **characterized in that** the flattening machine (3) comprises at least one support element (11); and a pressing device (12), which, in turn, comprises at least one pushing head (13) and at least one actuator (14), which is configured to move the pushing head (13) towards the support element (11) so that the pushing head (13) gets close to the support element (11) and exerts a pressure upon said dough portion (5) in order to flatten the dough portion (5) and obtain said flattened portion (6).

9. The plant according to claim 8, wherein said conveyor assembly (7) is configured to feed said dough portion (5) to the work station (4) and said flattened portion (6) from the work station (4) along said given path in a moving direction (A); said at least one actuator (14) is configured to move the pushing head (13) in a pushing direction (B), which is substantially perpendicular to the moving direction (A); in particular, the support element (11) has an upper surface (17), which faces the pushing head (13) and is substantially perpendicular to the pushing direction (B).

10. The plant according to claim 8 or 9, wherein the pushing head (13) has a pressing surface (19), which faces the support element (11) and is configured to come into contact with said dough portion (5), and a first heating element (20) (for example a resistance), which is configured to heat the pressing surface (19) so that the pressing surface (19) has a temperature ranging from about 130°C to about 240°C;
the support element (11) comprises an upper surface (17), which faces the pushing head (13), and a second heating element (21) (for example a resistance), which is configured to heat the upper surface (17) to a temperature ranging from about 130°C to about 240°C.

11. The plant according to any one of claims from 8 to 10, wherein said conveyor assembly (7) comprises a conveyor belt (18), which extends through the work station (4) between the support element (11) and the pushing head (13); in particular, the conveyor belt (18) is arranged in contact with said upper surface (17) of the support element (11); in particular, the conveyor belt (18) comprises at least one perfluorocarbon (in particular, polytetrafluoroethylene) at least on part of its surface facing the pushing head (13).

12. The plant according to any one of claims from 8 to 11, wherein the pushing head (13) comprises a pressing surface (19), which has, on at least a part thereof, at least one perfluorocarbon (in particular, polytetrafluoroethylene) and/or a ceramic material.

13. The plant according to any one of the claims from 8 to 12, wherein the pushing head (13) has a pressing surface (19), which faces the support element (11), in particular the upper surface thereof, has at least one recess (22) having a depth ranging from about 0.5 mm to about 8 mm (in particular, to about 2 mm) and is configured to at least partially press said dough portion (5) into it so that the flattened portion (6) assumes the peripheral shape of the recess (22); in particular, the recess (22) has a tapered shape.

14. The plant according to any one of the claims from 8 to 13 and comprising a rest assembly (23), which is arranged along said given path between the input station (8) and the work station (4) and is configured to allow said dough portion (5) to rest (for example, at a temperature ranging from about 18°C to about 35°C for an amount of time ranging from 15 minutes to 45 minutes); and a cooking assembly (24), which is arranged downstream of the work station (4) along the second segment (PB) of said given path and is configured to at least partially cook (for example, at a temperature ranging from about 100°C to about 200°C for an amount of time ranging from 0.5 minutes to 6 minutes) the flattened portion (6); in particular, said feeding assembly (10) is configured to obtain said dough portion (5) starting from a dough mass; more in particular, the feeding assembly (10) is also configured to obtain the dough mass by mixing the ingredients with one another (in particular, flour, water, salt, a fat component - for example, oil and/or lard - and, optionally, a leavening agent - for example, sodium bicarbonate, disodium diphosphate, corn starch and/or wheat starch) .

15. The method according to any one of the claims from 1 to 7 and implemented by means of a plant (1) according to any one of the claims from 8 to 14.
